# EUROPEAN PATENT APPLICATION

(11) **EP 3 876 301 A1**
(43) Date of publication of application: **08.09.2021**
(21) Application number: 20160796.7
(22) Date of filing: 03.03.2020
(51) Int. Cl.: H01M 2/10

(54) **HIGH FLATNESS SNAPPED-IN AND SEALED BOTTOM FLOOR FOR BATTERY ENCLOSURES ENCOMPASSING AN INTEGRATED COOLING SYSTEM**

(71) Applicant: Constellium Singen GmbH, 78224 Singen (DE); Constellium Extrusions Levice s.r.o., 934-01 Levice (SK)
(72) Inventor: ROBERTS, Dan, OXFORDSHIRE, OX154SQ (GB); JARRETT, Martin, OXFORDSHIRE, OX17 1RB (GB)
(74) Representative: Constellium - Propriété Industrielle

(57) **Abstract**

The invention relates to a battery holder (1) comprising a floor (100) and a frame (200) delimiting a housing intended to receive all or part of a battery.

The floor (100) comprises a plurality of profiles provided with male locking members (142) and female locking members (122).

The floor (100) varies between:
- a separate configuration in which the profiles are separated;
- a snapped configuration in which the male locking members (142) and the female locking members (122) cooperate with each other to oppose a return to the separate configuration and are also movable relative to each other according to a predetermined degree of freedom;
- a locking configuration in which an interlocking and sealing agent (130) is interposed between the male locking members (142) the female locking members (122) and removes (irreversibly) said degree of freedom.

## Description

### Technical field of the invention

The present invention relates to a battery holder intended to receive all or part of a battery to be supported by the battery holder.

### Background of the invention

The state of the art described below presents applications in the field of electric vehicles, but it could also relate to other fields or applications requiring the use of a battery holder.

The optimal functioning and the lifespan of a battery depends in particular on its operating temperature. In some cases, it is therefore necessary to provide a support allowing the transport of a coolant in order to perform a heat exchange with the battery when its temperature increases. When such cooling system is included in a vehicle, it is essential to prevent fluid leakage and to offer a robust support system to absorb the energy received when a shock or an impact occurs. In addition, the tolerances required for the flatness of the floor are very tight in the case of battery boxes, which is why special attention must be paid when assembling the battery support.

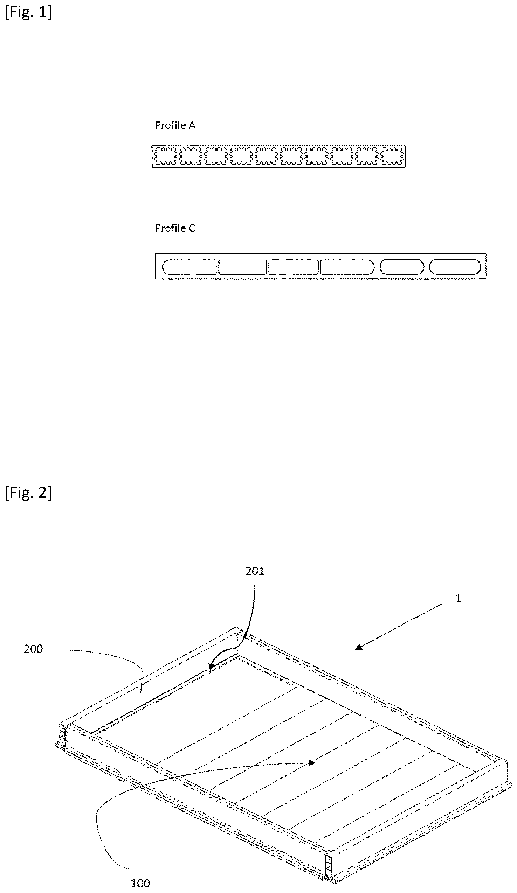

It is known from the state of the art, battery supports comprising a floor in which channels are arranged in order to allow the flow of a coolant (see figure 1). Some methods propose to assemble several cooperating profiles so as to improve the sealing of the floor. These solutions give satisfaction in that they allow heat exchange with the battery while having sufficient robustness to support the weight of the battery.

However, many such systems require welding during assembly, which needs a significant heat input. A potential side effect of this heat input is to introduce a distortion into the floor, which is detrimental to a good flatness. Furthermore, existing solutions do not allow sufficient absorption of the energy received during an impact. Finally, depending on the battery to be supported, it may be necessary to provide a battery holder having dedicated dimensions.

### Object of the invention

The object of the present invention is to propose a solution which answers at least one of the above-mentioned problems.

This object can be achieved by implementing a battery holder comprising a floor and a frame encircling all or part of the floor and delimiting a housing intended to receive all or part of a battery to be supported by the battery holder..

All or part of the floor is held in at least one internal face of all or part of the frame.

The floor comprises a plurality of profiles where each profile extends along a longitudinal direction of the profile.

All or part of the profiles of said plurality are provided with male locking members arranged along a first longitudinal edge, and all or part of the profiles of said plurality are provided with female locking members arranged along a second longitudinal edge opposite the first longitudinal edge in a lateral direction of the profile;

The floor varies between:
- a separate configuration in which the male locking members and the female locking members do not cooperate with each other and the profiles are separated;
- a snapped configuration in which the male locking members and the female locking members cooperate with each other by interlocking in a manner ensuring that the profiles thus secured by said interlocking are on the one hand held one relative to the other in their lateral directions by the interaction of the male locking members and the female locking members to oppose a return to the separate configuration and are on the other hand movable relative to each other according to a degree of freedom predetermined (rotation and / or translation) depending on the nature of the male locking members and the female locking members ;
- a locking configuration in which an interlocking and sealing agent is interposed between all or part of the male locking members and all or part of the female locking members of the profiles secured by the interlocking between the male locking members and the female locking members, and wherein the interlocking and sealing agent removes (irreversibly) said degree of freedom.

The arrangements described above renders possible to propose a mechanical play between two adjacent profiles of the plurality of profiles in the snapped configuration in order to control the flatness of the floor.

Alternatively, the locking configuration makes it possible to lock the relative position of the plurality of profiles when the floor presents a distortion less than a predetermined value.

The battery holder can also have one or more of the following characteristics, taken alone or in combination.

According to a first embodiment, it is possible to obtain a distortion of the floor per unit of 1m length in the lateral direction less than 0.5 mm, more particularly less than 0.3 mm and even more particularly less than 0.2 mm.

According to another embodiment, it is possible to obtain a distortion of the floor per unit area of 1m² between 0.2 mm and 1 mm with a typical value of 0.4 mm.

According to one embodiment, the female locking members comprise two tabs shifted between them in a transverse direction of the corresponding profile and each being equipped with a shoulder and wherein the male locking members comprise a projection capable of being inserted laterally between said two tabs and equipped with a lateral stop cooperating with said shoulder after lateral insertion.

According to one embodiment, the two tabs are configured to cooperate in a harpoon function, by deforming elastically and then locking their relative position relative to the male locking members.

Consequently, the elastic deformation of the tabs improves the mechanical play between two adjacent profiles of the plurality of profiles.

According to one embodiment, each profile of the plurality of profiles has a cutting section, perpendicular to the longitudinal direction, which is constant along the longitudinal direction.

According to one embodiment, the male locking members delimit at least one cavity extending along all or part of the corresponding profile in the longitudinal direction.

According to one embodiment, at least one cavity is configured to allow the passage of a coolant.

According to one embodiment, the female locking members are fitted with an opening configured to allow the placement of the interlocking and sealing agent between the male locking members and the female locking members from outside the profiles thus secured in the snapped configuration.

According to one embodiment, the male locking members comprise a male cooperation surface, and the female locking members comprise a female cooperation surface, said male cooperation surface being configured to be disposed opposite to the female cooperation surface; the interlocking and sealing agent being deposited on one and / or the other of said male cooperation surface and said female cooperation surface. More particularly, the deposition of the interlocking and sealing agent can happen in the separate configuration.

According to one embodiment, the interlocking and sealing agent comprises a seal and / or an adhesive bond associated or not with a gasket.

According to another embodiment, the interlocking and sealing agent comprises a weld, in particular obtained by low energy laser welding.

Thus, the male and female locking members can be sealed without introducing distortion into the floor.

Synergistically, the interlocking and sealing agent can guarantee the impermeability of the floor.

In general, the locking configuration can be obtained by minimizing the heat input, for example by using autogenous laser welding. As a result, the flatness of the floor in the locking configuration is increased.

Besides, when the plurality of profiles is in the snapped configuration or in the locking configuration, the floor can be robust enough to be moved in various directions without falling apart.

According to one embodiment, the at least one internal face of all or part of the frame comprises a groove having a profile complementary to that of the floor opposite the groove, and in which a fixing piece is interposed at the interface between the frame and the floor.

According to one embodiment, the fixing piece comprises a weld.

According to one embodiment, fixing piece comprises a groove seal and /or an adhesive.

According to this embodiment, an adhesive can be interposed at the interface of the groove and the floor with or without a groove seal.

The previously described arrangements make it possible to secure the floor to the frame without using high-precision cutting or machining to length means, a tolerance of +/-1 mm being guaranteed by the presence of the fixing piece.

According to one embodiment, the plurality of profiles can include one or more profiles having the following characteristics:
- a first type of profile in which a first longitudinal edge is adapted to be received in the groove, and in which a second longitudinal edge is provided with female locking members;
- a second type of profile in which a first longitudinal edge is adapted to be received in the groove, and in which a second longitudinal edge is provided with male locking members;
- a third type of profile in which a first longitudinal edge is provided with female locking members, and in which a second longitudinal edge is provided with male locking members.

According to one embodiment, the frame has the shape of a parallelepiped, for example a rectangular parallelepiped, defining two parallel longitudinal sides and two parallel lateral sides.

According to one embodiment, each profile of the plurality of profiles has a length adapted to the length of the groove included on the longitudinal sides of the frame.

According to one embodiment, the lateral dimension of the floor, in the snapped configuration of the profiles of the plurality of profiles, is adapted to the width of the groove included on the lateral sides of the frame.

According to this embodiment, the lateral dimension or the longitudinal dimension of each profile of the plurality of profile is configured to fit with the dimensions of the frame, and particularly if the shape of the frame presents at least one curved part.

The arrangements described above make it possible to provide a battery holder with a modular floor until the plurality of profiles are in the locking configuration. Indeed, the number of profiles included in the plurality of profiles makes it possible to simply adjust the width of the floor to adapt to a frame having a given dimension. In addition, the groove on the lateral sides and the groove on the longitudinal sides allows tolerating a variation of the order of 1 mm in length of the profiles when they are cut. That is to say, it is possible to have a difference of 2 mm between the longest profile of the plurality of profiles and the shortest profile of the plurality of profiles.

According to one embodiment, the frame comprises at least one frame profile comprising at least one chamber extending longitudinally in the frame profile, said at least one chamber allowing the circulation of a coolant.

According to one embodiment, the frame profile comprises at least one frame cavity extending longitudinally in the frame profile, said at least one frame cavity being configured to reduce the mass of the frame profile.

According to one embodiment, the plurality of profiles comprises extruded profiles delimiting at least one channel oriented in the longitudinal direction of the profiles and configured to allow the circulation of a coolant and to ensure a heat exchange between the coolant and the material constituting the floor.

According to one embodiment, at least one channel is in fluidic connection with at least one chamber included in at least one frame profile. In this way, a coolant can circulate in the frame and the floor of the battery holder. For example, the chamber can act as a manifold in order to collect or diffuse coolant from the chamber to the channel or alternatively from the channel to the chamber.

According to one embodiment, the profiles are made of extruded aluminum.

According to one embodiment, each channel comprises fins providing a heat exchange surface between the coolant and the material of the floor.

### Brief description of the drawings

Other aspects, aims, advantages and characteristics of the invention shall appear in the following detailed description of preferred embodiments thereof, given by way of nonlimiting example, in reference to the annexed drawings wherein:
[Fig. 1] represent examples of profile from the state of the art.
[Fig. 2] is a perspective view of an embodiment of the invention.
[Fig. 3] is a schematic sectional view of an example of a frame profile.
[Fig. 4] is a schematic perspective view of an embodiment of the invention.
[Fig. 5] is a schematic sectional view of the embodiment shown in Figure 4 in the longitudinal direction of the floor.
[Fig. 6] is a schematic perspective view of an embodiment of the invention.
[Fig. 7] is a schematic sectional view of the embodiment shown in Figure 6 in the lateral direction of the floor.
[Fig. 8] is a schematic sectional view of a first type of profile.
[Fig. 9] is a schematic sectional view of a second type of profile.
[Fig. 10] is a schematic sectional view of a third type of profile.
[Fig. 11] is a schematic sectional view of the male and female locking members in the snapped configuration.
[Fig. 12] is a table showing a comparison of floor distortion values that can be obtained with several profile and assembly techniques.

### Detailed description

In the figures and in the following description, the same references represent the same or similar elements. In addition, the different elements are not shown to scale in order to favor the clarity of the figures. Furthermore, the different embodiments and variants are not exclusive and can be combined with one another.

As illustrated in figure 2, the invention relates to a battery holder 1 comprising a floor 100 and a frame 200 encircling all or part of the floor 100 and delimiting a housing intended to receive all or part of a battery to be supported by the battery holder 1.

Figure 2 illustrates an embodiment in which the frame 200 has the shape of a rectangular parallelepiped defining two parallel longitudinal sides and two parallel lateral sides.

According to this embodiment, all or part of the floor 100 is held in at least one internal face of all or part of the frame 200.

In particular, said at least one internal face of all or part of the frame 200 comprises a groove 201 having a profile complementary to that of the floor 100 opposite the groove 201.

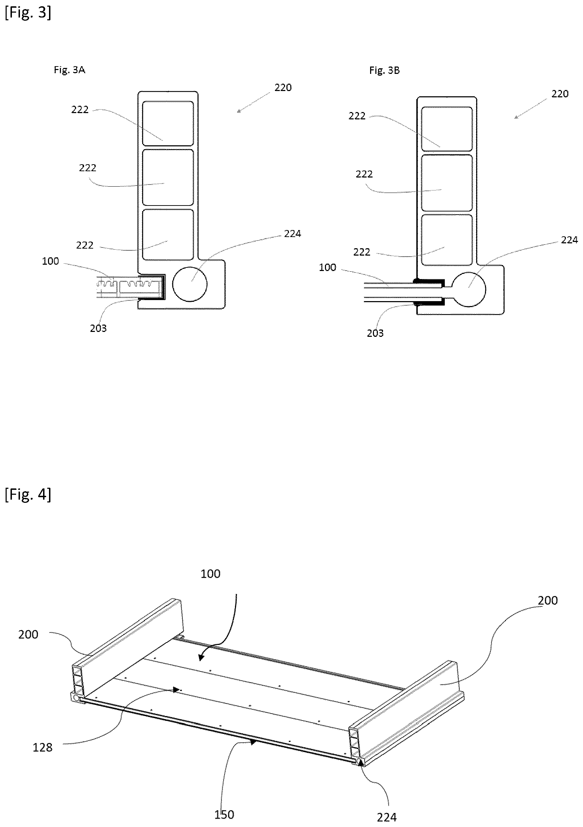

As illustrated in figure 3, a fixing piece 203, for example a groove seal can be interposed at the interface between the frame 200 and the floor 100.

According to one embodiment, the fixing piece 203 comprises an adhesive interposed at the interface of the groove 201 and the floor 100 with or without a groove seal.

According to another embodiment not represented on the figure, the fixing piece 203 comprises a weld.

The arrangements described above make it possible to secure the floor 100 with the frame 200 without using high-precision cutting or machining means, a tolerance of +/-1 mm being guaranteed by the presence of the fixing piece 203.

The frame 200 may comprise at least one frame profile 220 comprising at least one chamber 224 extending longitudinally in the frame profile 220, said at least one chamber 224 allowing the circulation of a coolant.

According to one embodiment, the frame profile comprises at least one frame cavity 222 extending longitudinally in the frame profile 220, said at least one frame cavity 222 being configured to lighten the mass of the frame profile 220.

In general, the frame profiles 220 can be made of extruded aluminum.

The floor 100 includes a plurality of profiles where each profile extends along a longitudinal direction of the profile.

In general, the profiles of the plurality of profiles can be made of extruded aluminum.

According to one embodiment, each profile of the plurality of profiles has a length adapted to the length of the groove 201 included on the longitudinal sides of the frame 200.

In general, each profile of the plurality of profiles has a cutting section, perpendicular to the longitudinal direction, which is constant along the longitudinal direction.

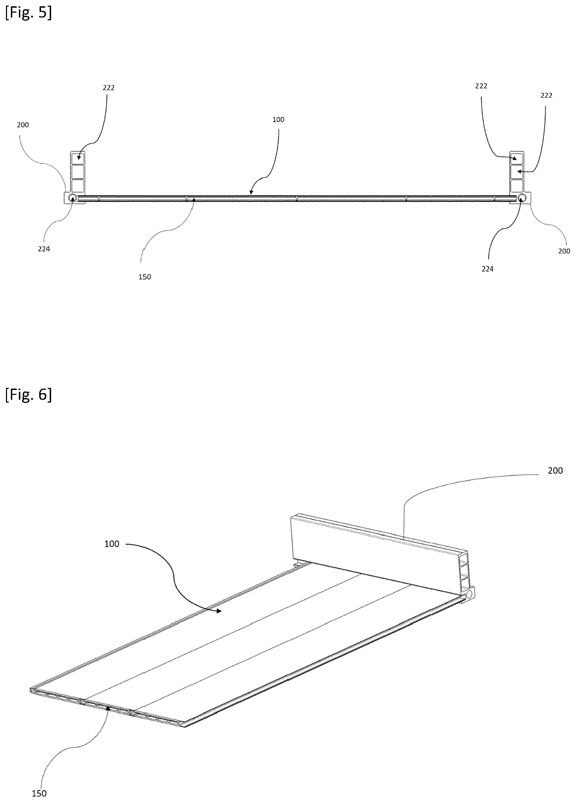

According to a variant illustrated in Figures 4 to 11, the plurality of profiles includes extruded profiles defining at least one channel 150 oriented in the longitudinal direction of the profiles and configured to allow the circulation of a coolant and to ensure a heat exchange between the coolant and the material of the floor 100.

Figure 2B show more particularly an embodiment where the at least one channel 150 is in fluidic connection with the at least one chamber 224 included in the at least one frame profile 220. Thus, a coolant can circulate in the frame 200 and the floor 100 of the battery holder 1. For example, the chamber 224 can act as a manifold in order to collect or diffuse coolant from the chamber 224 to the channel 150 or alternatively from the channel 150 to the chamber 224.

Advantageously, each channel 150 may include fins 152 providing a heat exchange surface between the coolant and the material of the floor 100.

All or part of the profiles of said plurality are provided with male locking members 142 arranged along a first longitudinal edge, and all or part of the profiles of said plurality are provided with female locking members 122 arranged along a second longitudinal edge opposite the first longitudinal edge in a lateral direction of the profile.

According to one embodiment, the male locking members 142 delimit a cavity extending along all or part of the corresponding profile in the longitudinal direction.

According to a particular variant, the cavity is configured to allow the passage of a coolant.

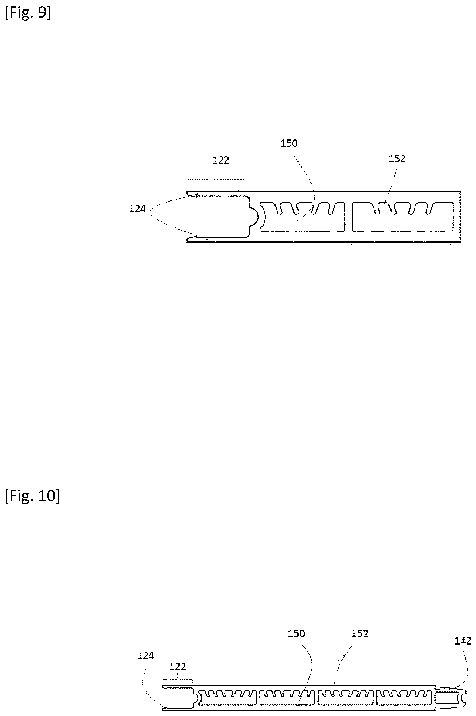

Figures 9 to 11 show an embodiment in which the female locking members 122 include two tabs 124 shifted between them in a transverse direction of the corresponding profile. The two tabs 124 are also each equipped with a shoulder 126.

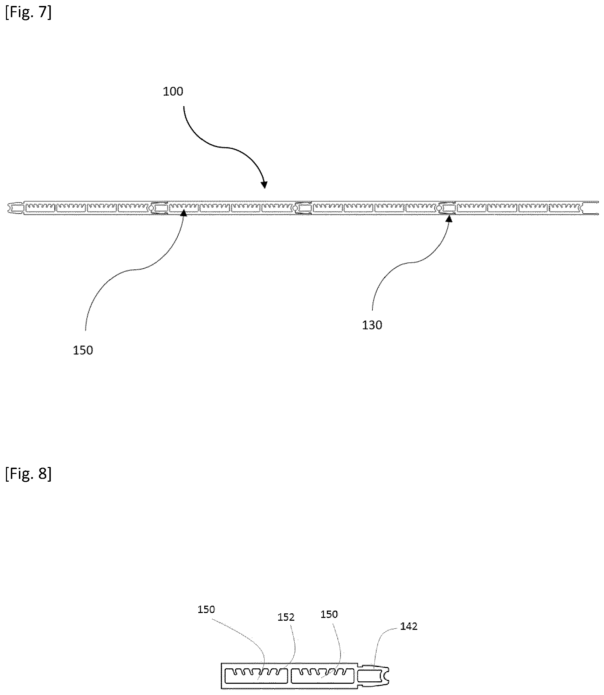

Figures 8, 10 and 11 illustrate an embodiment in which the male locking members 142 comprise a projection adapted to be inserted laterally between said two tabs 124 and equipped with a lateral stop 144 cooperating with said shoulder 126 after lateral insertion.

According to one embodiment, the two tabs 124 are configured to cooperate in a harpoon function, by deforming elastically and then locking their relative position relative to the male locking members 142.

In this way, the elastic deformation of the tabs 124 improves the mechanical play between two profiles of the plurality of profiles.

According to one embodiment, the plurality of profiles can include one or more profiles having the following characteristics:
- a first type of profile illustrated in figure 8, wherein a first longitudinal edge is adapted to be received in the groove 201, and in which a second longitudinal edge is provided with male locking members 142;
- a second type of profile illustrated in figure 9, wherein a first longitudinal edge is adapted to be received in the groove 201, and in which a second longitudinal edge is provided with female locking members 122;
- a third type of profile illustrated in figure 10, wherein a first longitudinal edge is provided with female locking members 122, and in which a second longitudinal edge provided with male locking members 142.

The previously described arrangements allow the floor 100 to vary between a separate configuration, a snapped configuration and a locking configuration.

In the separate configuration, the male locking members 142 and the female locking members 122 do not cooperate with each other and the profiles are separated.

In the snapped configuration, the male locking members 142 and the female locking members 122 cooperate with each other by interlocking in a manner ensuring that the profiles thus secured by said interlocking are on the one hand held one relative to the other in their lateral directions by the interaction of the male locking members 142 and the female locking members 122 to oppose a return to the separate configuration and are on the other hand movable relative to each other according to a predetermined degree of freedom (rotation and / or translation) depending on the nature of the male locking members 142 and the female locking members 122;

Advantageously, the lateral dimension of the floor 100, in the snapped configuration of the profiles of the plurality of profiles, can be adapted to the width of the groove 201 included on the lateral sides of the frame 200.

Besides, the lateral dimension or the longitudinal dimension of each profile of the plurality of profile can be configured to fit with the dimensions of the frame 200, and particularly if the shape of the frame 200 presents at least one curved part.

Finally, in the locking configuration, an interlocking and sealing agent 130 is interposed between all or part of the male locking members 142 and all or part of the female locking members 122 of the profiles secured by the interlocking between the male locking members 142 and the female locking members 122. The interlocking and sealing agent 130 thus irreversibly removes said degree of freedom.

According to a particular variant, the female locking members 122 are fitted with an opening 128 configured to allow the placement of the interlocking and sealing agent 130 between the male locking members 142 and female locking members 122 from outside the profiles thus secured in the snapped configuration.

According to another variant, the male locking members 142 comprise a male cooperation surface 143, and the female locking members 122 comprise a female cooperation surface 123.

The male cooperation surface 143 can be configured to be disposed opposite to the female cooperation surface 123, and the interlocking and sealing agent 130 can be deposited on one and / or the other of the male cooperation surface 143 and the female cooperation surface 123.

For example, the interlocking and sealing agent 130 can be deposited on the vertical surface 143 of the male locking members 142 in the separate configuration, so that the male locking members 142 and the female locking members 122 are secured when the floor is in the locking configuration.

According to one particular embodiment, a weld can be made at the interface 148 between the male locking members 142 and the female locking members 122. According to a more particular embodiment, this weld is obtained using a laser with or without a filler wire.

The interlocking and sealing agent 130 can in particular comprise a bonding by adhesive associated or not with a gasket or a sealing media.

The arrangements described above make it possible to propose a battery holder 1 with a modular floor 100 until the plurality of profiles are in the locking configuration. Indeed, the number of profiles included in the plurality of profiles makes it possible to simply adjust the width of the floor 100 in order to adapt to a frame 200 having a given dimension. In addition, the groove 201 included on the lateral sides and the groove 201 included on the longitudinal sides makes it possible to tolerate a variation of the order of 1 mm in length of the profiles when they are cut. That is to say, it is possible to have a difference of 2 mm between the longest profile of the plurality of profiles and the shortest profile of the plurality of profiles.

Furthermore, the assembly of the battery holder 1 makes it possible to obtain a floor 100 with improved flatness. Indeed, providing a mechanical play between two adjacent profiles of the plurality of profiles in the snapped configuration makes it possible to control the flatness of the floor 100.

In general, the locking configuration can be obtained by minimizing the heat input, for example by using autogenous laser welding or laser welding with filler wire.

The male locking members 142 and the female locking members 122 can therefore be sealed without introducing distortion into the floor 100.

According to one embodiment, the locking configuration makes it possible to lock the relative position of the plurality of profiles when the floor 100 has a distortion less than a predetermined value.

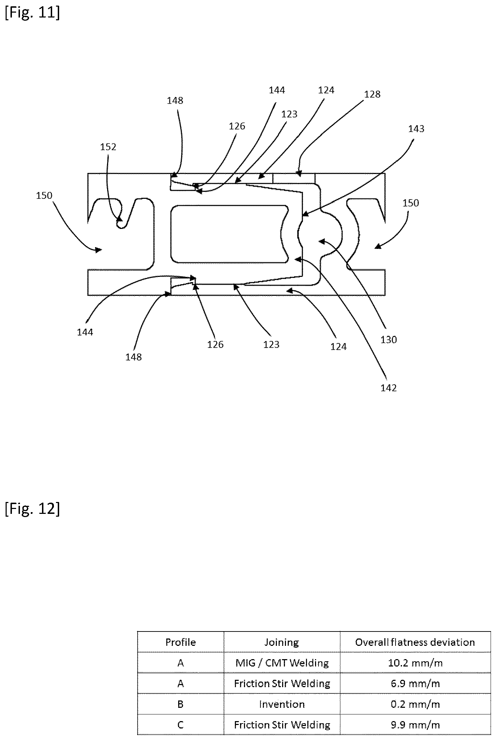

According to the arrangements described above, it is therefore possible to obtain a distortion of the floor 100 per unit of 1m length in the lateral direction less than 0.5 mm, more particularly less than 0.3 mm and even more particularly less than 0.2 mm. Indeed, figure 12 shows a table that compare flatness a floor 100 according to the invention or different type of floors 100, assembled with profiles from the state of the art presented in figure 1, along with dedicated joining means.

It is also possible to obtain a distortion of the floor 100 per unit area of 1m² between 0.2 mm and 1 mm with a typical value of 0.4 mm.

Synergistically, the interlocking and sealing agent 130 can guarantee the sealing of the floor 100.
Advantageously, when the plurality of profiles is in the snapped configuration or in the locking configuration, the floor 100 can be robust enough to be moved without falling apart in various directions.

## Claims

1. Battery holder (1) comprising a floor (100) and a frame (200) encircling all or part of the floor (100) and delimiting a housing intended to receive all or part of a battery to be supported by the battery holder (1) ;
all or part of the floor (100) being held in at least one internal face of all or part of the frame (200) ;
the floor (100) comprising a plurality of profiles where each profile extends along a longitudinal direction of the profile ;
all or part of the profiles of said plurality being provided with male locking members (142) arranged along a first longitudinal edge ;
all or part of the profiles of said plurality being provided with female locking members (122) arranged along a second longitudinal edge opposite the first longitudinal edge in a lateral direction of the profile ;
the floor (100) varying between :
- a separate configuration in which the male locking members (142) and the female locking members (122) do not cooperate with each other and the profiles are separated;
- a snapped configuration in which the male locking members (142) and the female locking members (122) cooperate with each other by interlocking in a manner ensuring that the profiles thus secured by said interlocking are on the one hand held one relative to the other in their lateral directions by the interaction of the male locking members (142) and the female locking members (122) to oppose a return to the separate configuration, and are on the other hand movable relative to each other according to a degree of freedom predetermined (rotation and / or translation) depending on the nature of the male locking members (142) and female locking members (122) ;
- a locking configuration in which an interlocking and sealing agent (130) is interposed between all or part of the male locking members (142) and all or part of the female locking members (122) of the profiles secured by the interlocking between the male locking members (142) and the female locking members (122), and wherein the interlocking and sealing agent (130) removes (irreversibly) said degree of freedom.

2. Battery holder (1) according to claim 1, wherein the female locking members (122) comprise two tabs (124) shifted between them in a transverse direction of the corresponding profile and each being equipped with a shoulder (126), and wherein the male locking members (142) comprise a projection capable of being inserted laterally between said two tabs (124) and equipped with a lateral stop (144) cooperating with said shoulder (126) after lateral insertion.

3. Battery holder (1) according to one of claims 1 or 2, wherein each profile of the plurality of profiles has a cutting section, perpendicular to the longitudinal direction, which is constant along the longitudinal direction.

4. Battery holder (1) according to anyone of claims 1 to 3, in which the male locking members (142) delimit a cavity extending along all or part of the corresponding profile in the longitudinal direction.

5. Battery holder (1) according to any one of claims 1 to 4, in which the female locking members (122) are fitted with an opening (128) configured to allow the placement of the interlocking and sealing agent (130) between the male locking members (142) and female locking members (122) from outside the profiles thus secured in the snapped configuration.

6. Battery holder (1) according to any one of claims 1 to 5, wherein the male locking members (142) comprise a male cooperation surface (143), and wherein the female locking members (122) comprise a female cooperation surface (123), said male cooperation surface (143) being configured to be disposed opposite to the female cooperation surface (123) ; the interlocking and sealing agent (130) being deposited on one and / or the other of said male cooperation surface (143) and said female cooperation surface (123).

7. Battery holder (1) according to any one of claims 1 to 6, wherein the interlocking and sealing agent (130) comprises a seal, an adhesive bond associated or not with a gasket.

8. Battery holder (1) according to any one of claims 1 to 7, wherein the interlocking and sealing agent (130) comprises a weld, in particular obtained by laser welding.

9. Battery holder (1) according to any one of claims 1 to 8, wherein said at least one internal face of all or part of the frame (200) comprises a groove (201) having a profile complementary to that of the floor (100) facing the groove (201), and in which a fixing piece (203) is interposed at the interface between the frame (200) and the floor (100).

10. Battery holder (1) according to anyone of claims 1 to 9, in which the frame (200) has the shape of a parallelepiped defining two parallel longitudinal sides and two parallel lateral sides.

11. Battery holder (1) according to claims 9 and 10, wherein each profile of the plurality of profiles has a length adapted to the length of the groove (201) included on the longitudinal sides of the frame (200).

12. Battery holder (1) according to claims 9 and 10 or according to claim 11, wherein the lateral dimension of the floor (100), in the snapped configuration of the profiles of the plurality of profiles, is adapted to the width of the groove (201) included on the lateral sides of the frame (200).

13. Battery holder (1) according to any one of claims 1 to 12, in which the frame (200) comprises at least one frame profile (220) comprising at least one chamber (224) extending longitudinally in the frame profile (220), said at least one chamber (224) allowing the circulation of a coolant.

14. Battery holder (1) according to any one of claims 1 to 113, in which the plurality of profiles comprises extruded profiles delimiting at least one channel (150) oriented in the longitudinal direction of the profiles and configured to allow circulation of a coolant and to ensure heat exchange between the coolant and the material of the floor (100).

15. Battery holder (1) according to claim 14, wherein each channel (150) comprises fins (152) providing a heat exchange surface between the coolant and the material of the floor (100).

16. Battery holder (1) according to claim 13 and any one of claims 14 to 15, wherein a part of the at least one channel (150) is in fluidic connection with a part of the at least one chamber (224).
